# EUROPEAN PATENT SPECIFICATION

(11) **EP 3 713 823 B1**
(45) Date of publication and mention of the grant of the patent: **08.09.2021**
(21) Application number: 18814696.3
(22) Date of filing: 23.11.2018
(51) Int. Cl.: B62K 25/08

(54) **LATERAL FRONT MONO-SUSPENSION FOR A MOTORCYCLE**
SEITLICHE VORDERE MONOAUFHÄNGUNG FÜR EIN MOTORRAD
MONO-SUSPENSION AVANT LATÉRALE POUR MOTOCYCLETTE

(30) Priority: 24.11.2017 IT 201700135197
(43) Date of publication of application: 30.09.2020
(73) Proprietor: Piaggio & C. S.P.A., 56025 Pontedera Pisa (IT)
(72) Inventor: RAFFAELLI, Andrea, I-56025 Pontedera (Pisa) (IT)
(74) Representative: Carangelo, Pierluigi
(86) International application number: PCT/IB2018/059255
(87) International publication number: WO 2019/102409

(56) References cited:
- WO-A2-2012/160323
- FR-A1- 2 940 242
- JP-A- 2004 237 791
- JP-U- H01 145 691
- US-A- 6 047 981
- Anonymous: "I want it: Stock Gilera CX 125 in NorthWest Italy - Rare SportBikes For Sale", , 1 January 1991 (1991-01-01), XP055492454, Retrieved from the Internet: URL:http://raresportbikesforsale.com/i-wan t-it-stock-gilera-cx-125-in-northwest-ital y/ [retrieved on 2018-07-13] cited in the application

## Description

The present description relates to the technical field of motorvehicles and, in particular, it relates to a lateral front mono-suspension for a motorcycle.

More specifically, the present description relates to a suspension for a front wheel of a motorvehicle, in particular, a mono-suspension for a front wheel of a motorcycle.

### State of the art

Telescopic front mono suspensions for motorvehicles are known, in particular, for two-wheeled motorbikes and motorcycles.

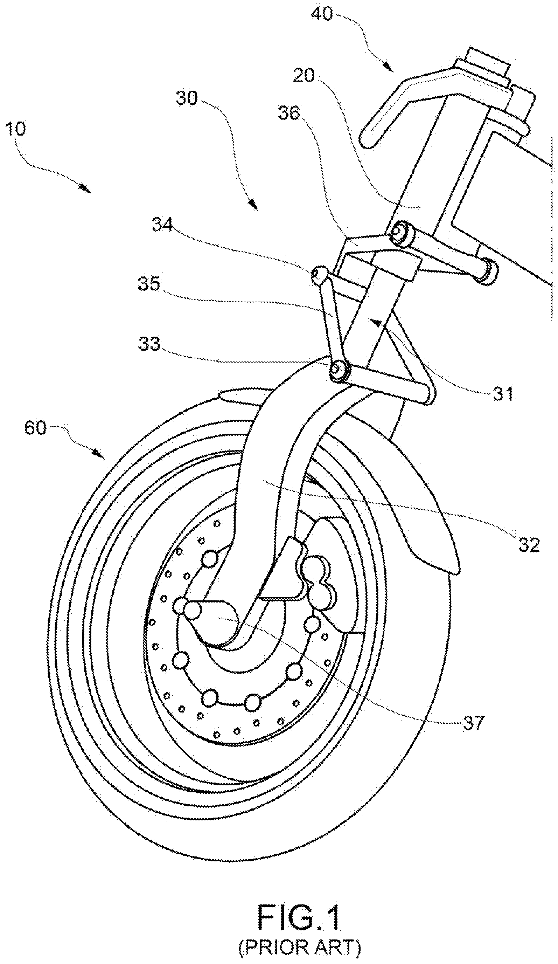

With reference to Fig. 1 according to the prior art, in a motorcycle 10, a single-arm suspension 30 configured as a telescopic mono-suspension comprises a sheath 20, a tube 31 and a foot 32. The foot 32 and the tube 31 are integral with each other. The tube 31, or piston 31, is slidingly coupled to the sheath 20 to be inserted therein along a sliding axis (normally the axis of symmetry of the sheath) and the foot 32 is connected to the axis 37 of the wheel 60.

The main problem to be solved with respect to a telescopic mono-suspension, as shown in figure 1, is to prevent the rotation between the tube 31 and the sheath 20 along the sliding axis, a rotation, which would be independent of that made by the driver through the steering handlebar 40 (for example, because of the friction of the asphalt).

The solution of the front suspension represented in Fig. 1, for example, adopted in the motorbike marketed under the name Gilera® CX, adopts a pair of connecting rods, similar in the operation to the design generally known in the front trolleys of planes. The connecting rods 35 and 36 of the suspension in Fig. 1 connect the foot 32 and the sheath 20 and are hinged to each other by means of a hinge 34. The connecting rod 35 is rotatably connected on the axis 33 to the foot 32.

With respect to similar solutions, problems occur when it is desired to reduce the volumes and weights or when, for aesthetic reasons, it is desired to conceal the connecting rods, wholly or in part, despite maintaining the possibility to access them for assembly and disassembly.

US6047981 discloses the preamble of claim 1.

### Object and subject of the invention

It is an object of the present invention to provide a suspension for a motorcycle or a motorvehicle, which wholly or at least in part overcomes the problems and disadvantages of the prior art.

It is a further object of the present invention to provide a front axle of a motorcycle and a motorvehicle, which use the suspension forming the subject of the invention and solve the problems and overcome the disadvantages of the prior art.

It is an object of the present invention a suspension as defined in general in claim 1 and as defined in the appended dependent claims 2-13 in particular embodiments of the same.

Further specific objects of the invention include a front axle of a motorvehicle as defined in the appended claim 14 and a motorvehicle as defined in the appended claim 15.

### Detailed description of embodiments of the invention

### List of figures

The invention will now be described by way of a non-limiting example, with particular reference to the drawings in the appended figures, wherein:
- figure 1 shows a single arm front suspension, for example, used in the Gilera® CX motorbike, according to the prior art;
- figure 2 shows a general view of the single arm front suspension, according to the present invention, detached from the motorvehicle on which it is mounted in use;
- figure 3 shows the single arm front suspension of figure 2 in a frontal (a) and upper (b) view;
- figure 4 shows a partial sectional view of a first embodiment of the general diagram of figures 2 and 3, wherein there is no hydraulic damping;
- figure 5a shows an exploded view of the single arm front suspension of figure 4;
- figure 5b shows a structural variation of the assembly of figure 5a;
- figure 6 shows a partial sectional view of a second embodiment of a suspension according to the general diagram of figures 2 and 3;
- figure 7 shows an exploded view of the single arm front suspension of figure 6;
- figure 8 shows the suspension of figures 6 and 7 in different states of compression (a)-(d); and
- figure 9 shows a third embodiment of the suspension according to the invention.

It is specified herein that elements of different embodiments described below can be combined to provide further embodiments without limitations, respecting the technical concept of the invention, as understood by the average expert in the field without problems according to what is described and claimed below.

Furthermore, the present description refers to the prior art for the implementation thereof, as regards the detailed features not described, such as, for example, elements of lesser importance usually used in the prior art in solutions of the same type.

When an element is introduced, it is always understood that it can be "at least one" or "one or more" unless otherwise explicitly stated.

When a list of elements or features is included in this description, it is understood that the finding according to the invention "comprises" or alternatively "consists of" such elements.

Hereinafter, "upper" and "lower" will respectively indicate elements which are farther or closer to the ground, in use.

### General structure of the invention

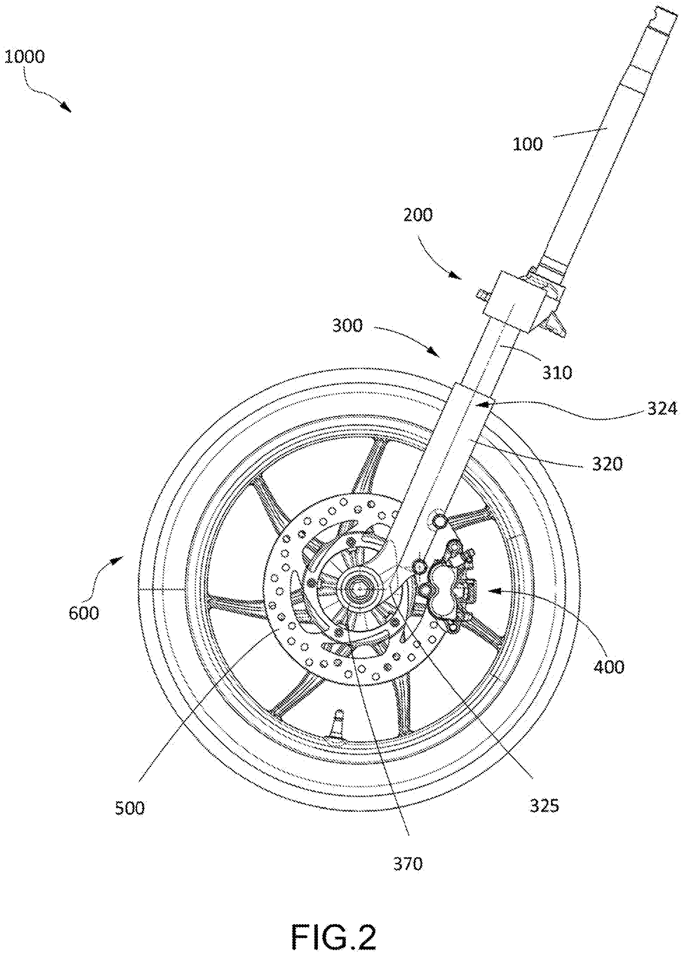

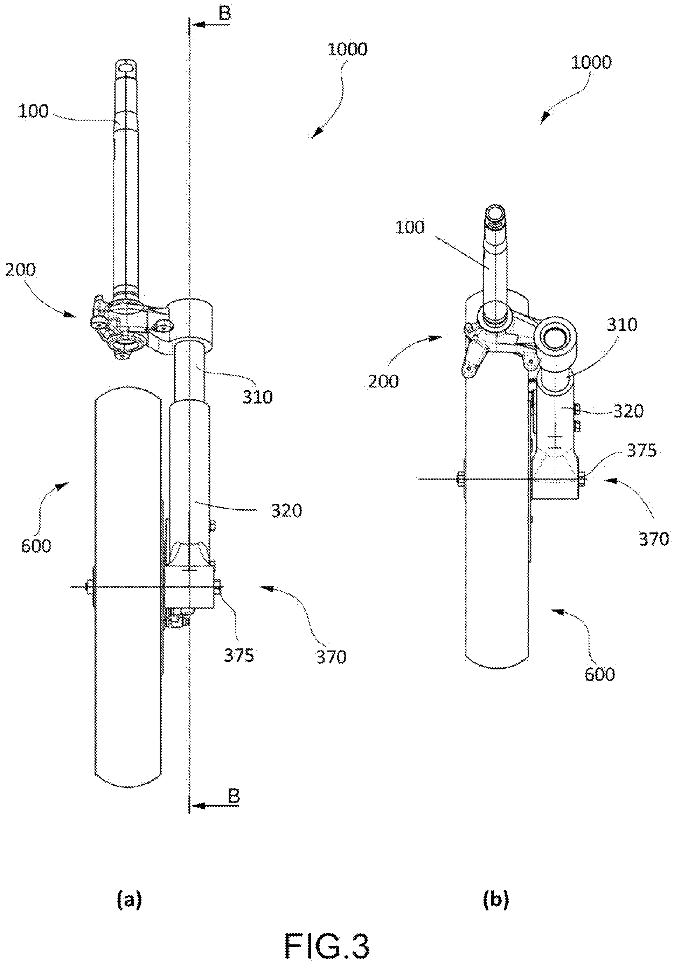

A front axle 1000 of a motorcycle is illustrated with reference to the figures 2 and 3, which uses a single arm front suspension 300 comprising an upper portion 100 and a lower portion 300, connected to the upper portion by means of a rigid joint 200. The rigid joint 200 serves solely to move the axis of the upper portion 100 and make room for the wheel 600, the brake disk 500 and the brake caliper 400.

As can be observed in figures 2 and 3, there are no further external connections between the upper portion 100 and the lower portion 300 of the single arm front suspension, unlike in the prior art.

The lower portion 300 constitutes the actual suspension and comprises a tubular element 320,345 (also sometimes called "tube" or "fork stem" or "second element" of the suspension) in which a piston 310, 315 moves slidingly (also sometimes called "first element" of the suspension). The tubular element 320,345 comprises a first end 324 for slidingly housing the piston 310, 315, and a second end 325, 321, also called foot, for connecting the wheel 600. In this particular example, the second end 325, 321 is fixed to the hub of the wheel 600 with a rotating connection. According to one aspect of the invention, the second end 325, 321 extends at a certain angle with respect to the extension axis of the remaining part of the tubular element 320, 345. Consequently, the body of the tubular element 320, 345 and piston 310, 315 appear to have extension axes which stay at a distance from the hub of the wheel 600.

As will be seen later on, in the present invention, the two connecting rods, in series, of the prior art are at least partially hidden in the foot 325, 321 when the suspension is at rest and in any case the connection thereof to the foot is internal. In this way, the two connecting rods are no longer completely external and the volumes are reduced, leaving a wider constructive margin for the aesthetic designer.

At this point, it must be specified that the fulcrum of the lower connecting rod or second connecting rod could be fixed in a different point to the hub of the wheel. However, it is preferably fixed to the hub, because a smaller volume is thus obtained.

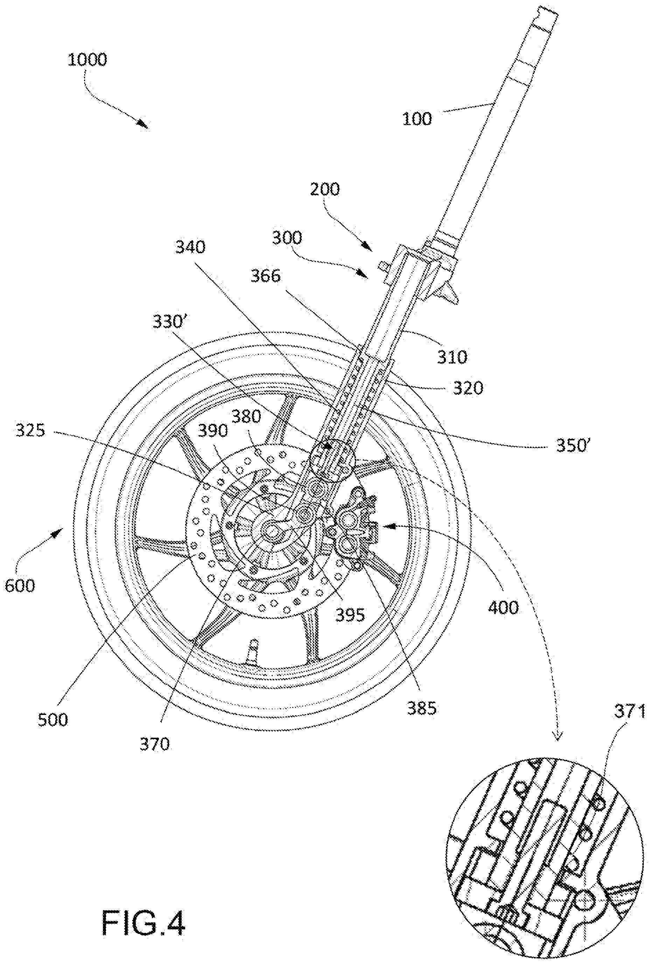

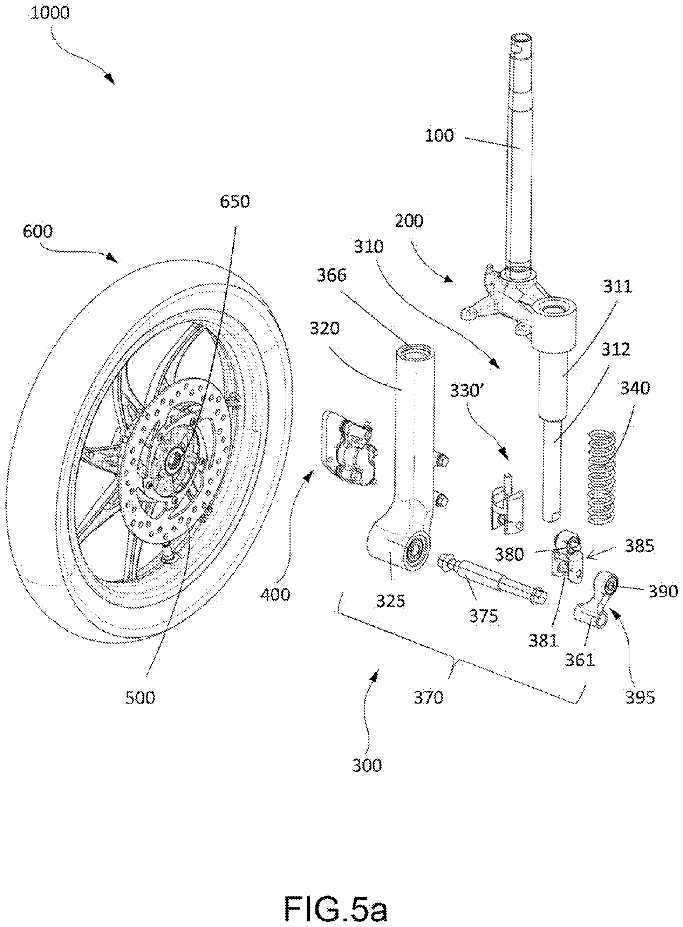

With reference to figure 4 and figures 5a-5b, a first embodiment of the suspension of the present description is illustrated.

As mentioned above, the foot 325 comprises at least partially therein, two connecting rods, in series, which are rotatingly connected to each other between the lower end of the piston 310 and the wheel pin 370, 375, the latter being fixed to the hub 650 of the wheel 600.

In particular, a fulcrum 361 (by fulcrum in general we can understand a terminal portion of the connecting rod configured for a rotating connection about an axis) of the first connecting rod 385 is rotatingly connected to the wheel pin 375, while the rotation of the steering handlebar is rigidly transmitted to a fulcrum 380 of the second connecting rod, through the upper part of a piston 310 (in which two integral parts 311,312 can be distinguished). Advantageously, the tubular element 320 can act as a cylindrical guide.

The first connecting rod (upper) is indicated with 385, while the second connecting rod (lower) with 395. With reference to figure 5a, the fulcrums of the connecting rods are indicated from below with 361, 390, 381, 380. The rotation axes of just as many hinges pass through these fulcrums, in use. The lower fulcrum 381 of the upper connecting rod 385 is hinged to the upper fulcrum 390 of the lower connecting rod 395 in a coaxial manner. The upper fulcrum 380 of the upper connecting rod 385 is fixed to the element 330'. The element 330' is inserted, in turn, into the piston formed by a part with a smaller diameter 312 rigidly in series with a part with a greater diameter 311. The part with a smaller diameter 312 of the piston 310 is sized so as to couple coaxially with a helicoidal spring 340, surrounding it, which is part of the suspension.

It must be specified that the fulcrum of the lower connecting rod or second connecting rod could be fixed in a different point to the hub of the wheel. However, it is preferable to fix the same to the wheel pin or hub because, advantageously, this solution offers a reduced volume.

The fixing of the fulcrum 361 to the foot 325, which is fixed, in turn, to the hub 600, is carried out by means of a wheel pin 375, which is inserted into both. The assembly of fixing elements to the hub is thus indicated with 370.

Note here that in Fig. 5a:
- the fulcrum 361 is represented as tubular;
- the fulcrum 390 is like a ring with bearings in the inner circumference;
- the fulcrum 381 consists of a pin fixed to two wings of the upper connecting rod; and
- again, the fulcrum 380 is a ring with bearings in the inner circumference.

Bearings are also present in the second end 325 of the tubular element 320. In this way, the rotating connections between the tubular element 320, piston 310, lower connecting rod 395 and upper connecting rod 385 comprise radial bearings to facilitate the reciprocal rotation of the elements.

In a particular non-illustrated version, the second end 325 is fixed to a different axis with respect to the axis of the hub 650 of the wheel 600 and the bearings (or rotoidal couple) are installed on the connecting rod 395.

The tubular element 320 is preferably open towards the bottom at least in a position along the second end 325, in such a way that it can be accessed inside the same for the assembly of the connecting rods. This access is particularly advantageous if the piston is not in line with the axis of the wheel.

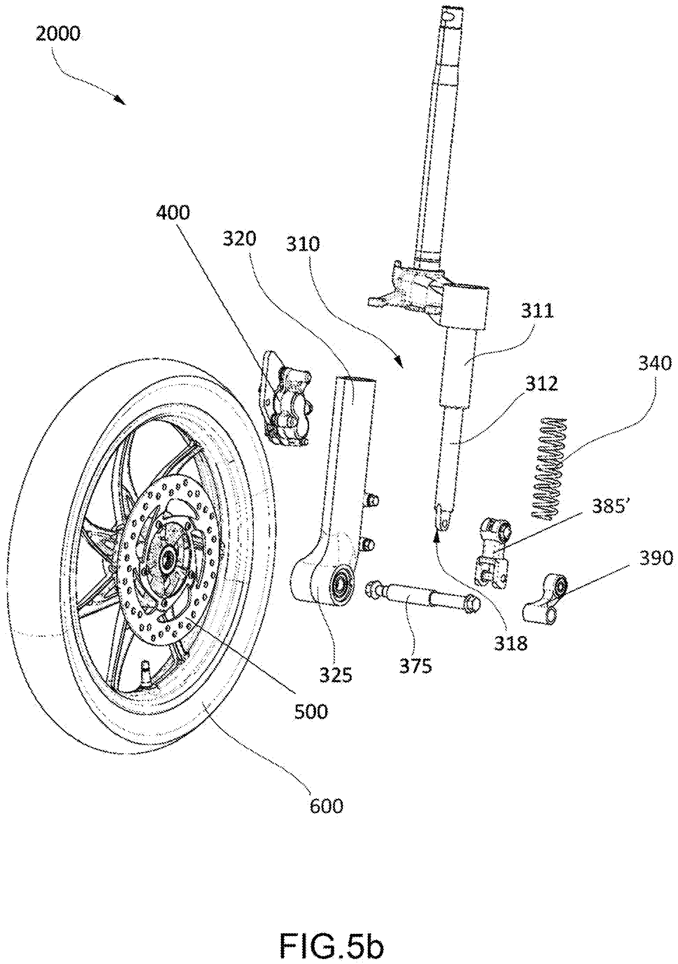

In the case of the present embodiment, in the front suspension in Figs. 4 and 5 a bush 366 is positioned between the tubular element 320 and piston 310. This bush 366 acts as a dragging element, which has a damping and, optionally, also a guiding effect for the piston 310.

More specifically, the dragging element (dampers) 366 guide the upper portion 311 of the piston 310 into the tubular element 320, while the lower portion 312 slides on a portion 371 of the tubular element 320 (cfr. Fig. 4). In this case, the spring 340 is arranged in abutment between said portion 371 and the linking region of portions 311 and 312 of the piston 310.

In Fig. 5b, the front axle 2000 is illustrated, in which the element 330' is absent and the end 318 of the piston 310 is shaped so as to be able to couple directly with the upper connecting rod 385', which is different, in turn, to that of the first embodiment in figure 5.

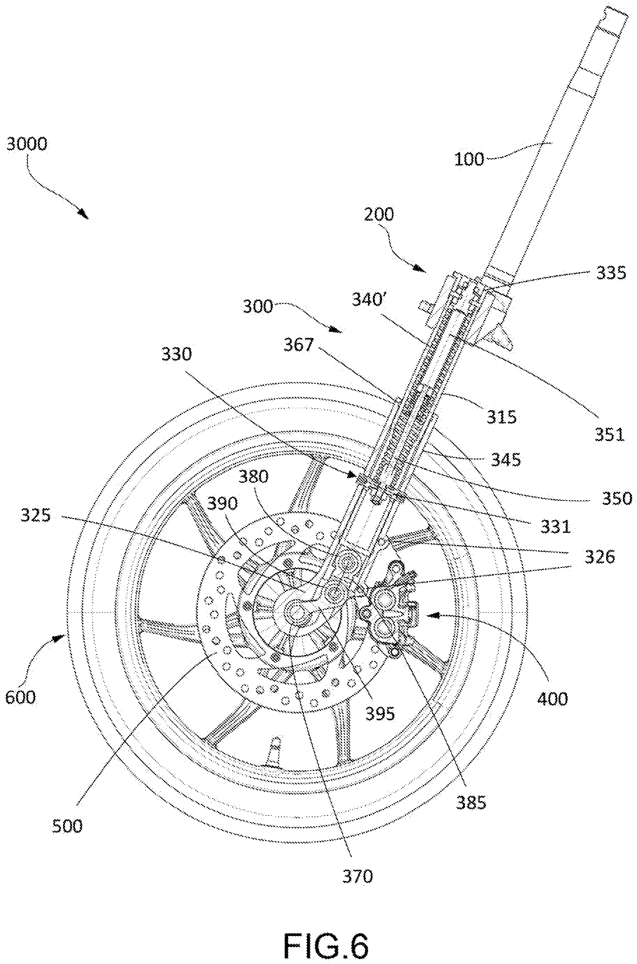

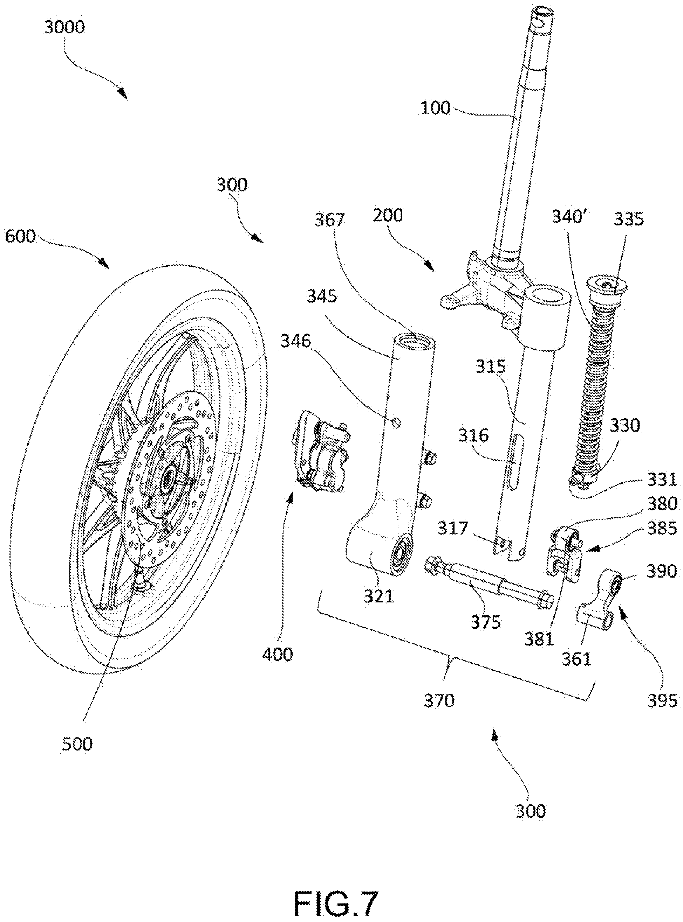

Now, with reference to figures 6 and 7, a second embodiment of the front axle 3000 is illustrated, different from the first one described above. In fact, in this second embodiment, the upper connecting rod 385 is connected directly to the hollow piston 315 (at the end thereof 317), which replaces the piston 310 in the first embodiment and is configured to be received in the tubular element 345. In the suspension in Figs. 6 and 7, a damper piston 350,351 is placed inside the hollow piston 315, with two ends, between which is a spring 340' is compressed. At the lower end 330 of the damper piston 350,351 a pin 331 protrudes laterally (perpendicularly to the axis of the damper piston). In use, this pin 331 crosses an eyelet 316, without contact, made on the hollow piston 315. The pin 331 is thus fixed in a hole 346 of the tubular element 345. The upper end 335 of the piston, opposite the one comprising the pin 331, is fixed to the connection 200. In this way, the hollow piston can sink and the spring 340' can be compressed during the dampening. The eyelet 316 doesn't act as a guide because the rotation about the longitudinal axis of the hollow piston 315 is locked by the connecting rods 385, 395. However, the eyelet constitutes a safety device should the connecting rods break.

In all of the embodiments, the helicoidal spring is the return elastic element (means), which enables the system to return the initial position. Instead of the helicoidal spring, other known systems can be used, such as a torsion bar in the wheel pin, or a leaf spring.

The tubular element 345, in particular the foot 321 thereof, can comprise an opening through which said first and said second connecting rod 385, 395 protrude, at least partially, in the compression position thereof. Or, the tubular element 345 can be sized so as to enclose the connecting rods 385,395 in any reciprocal position thereof.

A bush 367 can be present in this embodiment, too, at the upper end of the tubular element 345 so as to cause a dampening of the movement on the hollow piston 315. Connection supports 326 can also be present on the tubular element 345 for connecting a brake caliper 400 to.

In a particular embodiment (not shown), the rotating connection between the upper connecting rod 385 and the piston 315 and the rotating connection between the lower connecting rod 395 and the foot 321, have rotation axes intersecting the axis of symmetry (or main extension axis) of the piston. In this version, the rotation axis between the upper and lower connecting rods is not incident to said axis of symmetry in any movement of the suspension.

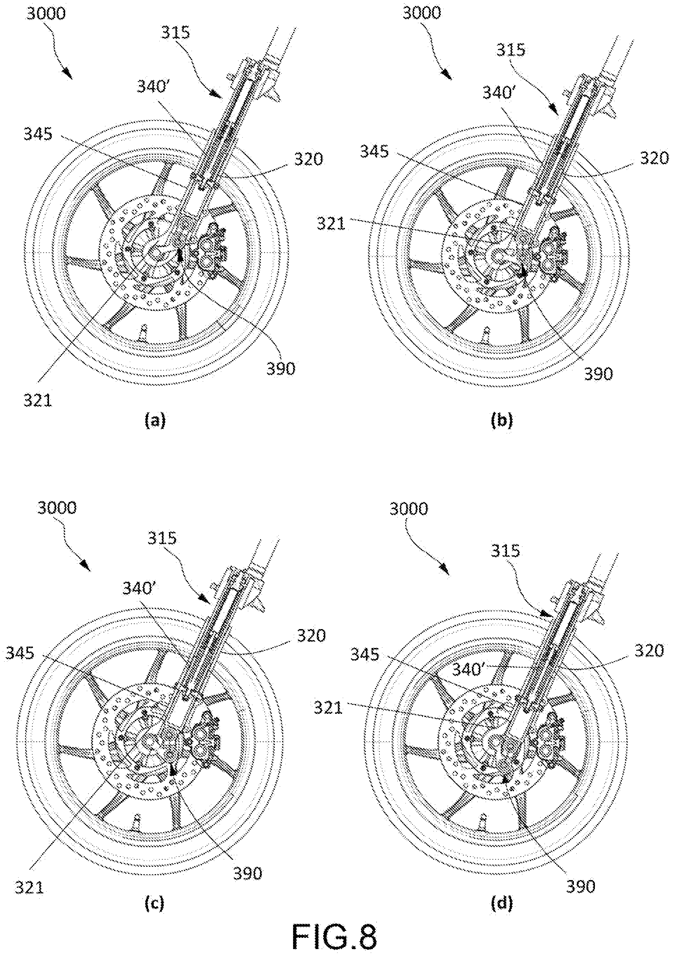

Fig. 8 shows four operating steps of the suspension according to the second embodiment.

In the first step (Fig. 8(a)), the connecting rods are entirely inside the foot 321, and preferably, they form an initial angle, with each other, different from the straight angle. The spring 340 is not compressed.

In the second step (Fig. 8(b)), the fulcrum 390 (connection point between the two connecting rods) protrudes from the foot 321 because of the compression of the hollow piston 315. The spring 340 starts to oppose resistance.

In the third step (Fig. 8(c)), the protrusion of the joint (hinge) continues, in 390, the protrusion becomes maximum in the fourth step (Fig. 8(d)). In this fourth step, the angle between the two connecting rods is almost null (or almost 360° counted in the other direction) and the spring 340 is compressed to a maximum. The spring 340 will then cause (in subsequent steps, not shown) the return of the suspension to a resting state corresponding to that in the first step above.

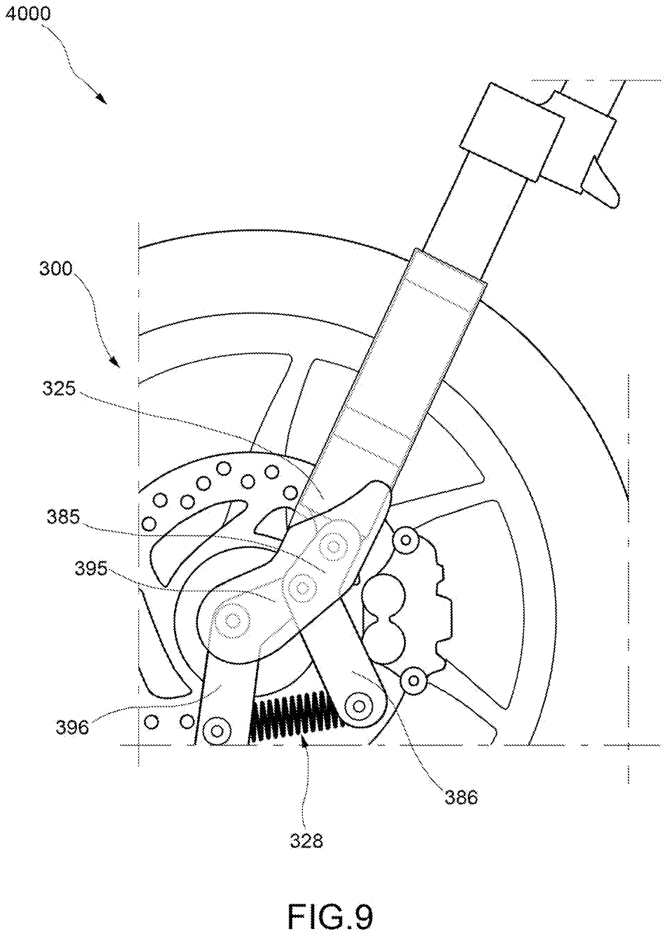

Finally, with reference to figure 9, a different embodiment of a front suspension is represented in a different front axle 4000. The first and the second connecting rod of such suspension each comprise an integral projecting element, called first projecting element 386 and second projecting element 396 respectively. The first projecting element 386 and the second projecting element 396 are connected to each other by means of a spring 328 or other means or an elastic element. This spring 328 is an example of said return elastic means. Instead of being arranged between the foot 325 and the piston 310, the elastic means are advantageously arranged between the two connecting rods 385, 395 to facilitate potential maintenance operations.

The front suspension, forming the subject of the present description, comprises in all of the above illustrated and described embodiments, the presence of a "first element" or piston 310, 315, which comprises two opposite ends. Clearly, one of the two ends of the first element is connected, in use, to the steering handlebar of the motorvehicle (for example, by means of a rigid kinematic mechanism, such as the one shown in Figs. 2, 3 and 10), the other end is kinematically connected to the wheel.

This interaction occurs by means of a second element 320, 345 (which comprises, for example, or consists of a tube), slidingly coupled to the first element 310; 315 and connectible to the wheel 600. Therefore the first element 310, 315 is movable between a resting position and an operating position inside the second element 345. The movement is made reversible by convenient return elastic means 340, 340' for returning the first element to the resting position. The elastic means can consist of a spring or another equivalent element (see above).

This configuration does not fulfil the features of the suspension according to the invention. In fact, it needs a first connecting rod 385 and a second connecting rod 395. These two connecting rods are placed in series: basically, one end 381 of the first connecting rod 385 is rotatingly connected to one end 390 of the second connecting rod 395. The opposite end 380 of the first connecting rod 385 is connected to the first element and the opposite end 361 of the second connecting rod 395 is connected to the second element, for example, at the axis of the wheel 600, so that the end 361 is in axis with the rotation axis of the wheel 600. In a further embodiment, the rotating connection axis of the end 361 is not coincident with the axis of the wheel, being, for example, parallel thereto.

In every state of the front suspension described herein, the first connecting rod 385 and the second connecting rod 395 advantageously form between each other an angle different from the straight angle.

Preferably, the rotating connection of the connecting rods occurs with axes lying on planes orthogonal to the relative telescopic movement between the first and second element, which interconnect during the sinking of the suspension. In fact, if the above axes were not orthogonal to the telescopic movement, the rotation of the connecting rods would have a component about the telescopic axis and would thus allow a certain level of that rotation, which, instead, is absolutely avoidable according to the invention, in other words, an additional steering movement to that made by the steering handlebar.

The foot or second element can be configured so that the second end 381 of the first element lies, in a resting position, inside the foot 325; 321. The same end 381 can protrude, at least in part, carrying a part of the two connecting rods outside.

The above spring 340; 340' can be arranged in abutment between said first 310 and second element 320 and preferably arranged therein, so as not to be visible when the suspension is assembled.

According to one aspect of the invention, the first element comprises, in addition to the spring, in a coaxial manner and at least partially inside the spring, a hydraulic assembly with a cylinder 351 and a relative piston 350. One end of the spring is fixed to the second element 320. Said hydraulic piston provides a damping action for the movement of the suspension. For this purpose, a bush can be comprised, in addition to, or to replace the hydraulic piston, which acts by friction between the first and the second element.

The damping means, such as the bushes 366, 367, do not necessarily have to be arranged between the first and the second element 310,320, but they can be arranged, for example, in the rotating connection 390, 381 or in another advantageous position to cause friction, opposing the movement of the suspension.

As illustrated in the appended figures, the first element 310,315 is slidingly housed in the second element 320,345. It is nonetheless clear that the relative arrangement of the first and second element can be inverted, so that the first element receives the second element therein in a sliding manner.

As a further advantageous feature of the general structure of the front suspension of the present description, the second element comprises connection supports 326 connectible to a brake caliper 400.

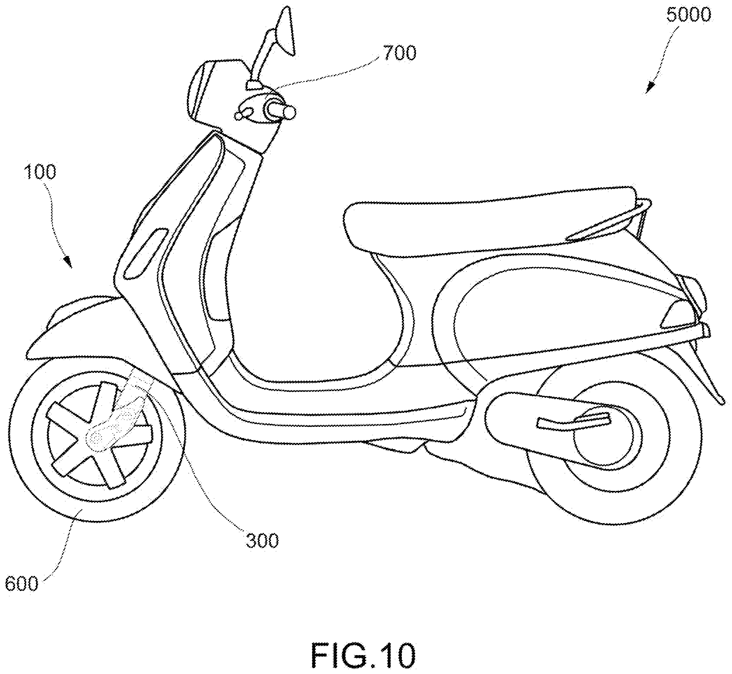

Finally, note that a front axle is shown in the figures, which can be obtained using the suspension 300 according to the invention. This front axle, in turn, can be the front axle 1000 of a motorvehicle 5000 (see Fig. 10), for example, a motorcycle. It is however possible to use front axles with two suspension arms or any other structure using one or more suspensions 300.

Included among the advantages of the invention are:
- easy assembly of the connecting rods; and
- the fact that the connecting rods are not normally visible; and
- the fact that the connecting rods have no external volume.

In the foregoing the preferred embodiments were described and variations to the present invention were proposed, however, it is understood that those skilled in the art can make modifications and alterations without departing from the relative protective scope, as defined by the appended claims.

## Claims

1. A suspension (300) for a wheel (600) of a motorvehicle with a steering handlebar, comprising:
- a first element (310; 315), comprising a first end and a second end opposite the first end, the first end being connectible to the steering handlebar of the motorvehicle;
- a second element (320,345), slidingly coupled to the first element (310; 315) and connectible to the wheel (600), said first element (310,315) being movable, at least partially, with respect to the second element, between a resting position and an operating position;
- return elastic means (340,340') for returning the first element (310; 315) to the resting position;
the suspension (300) comprising:
- a first connecting rod (385) with opposite first and second ends;
- a second connecting rod (395) with opposite first and second ends;
- the second end of the first element (310; 315) being rotatably connected to the first end (380) of the first connecting rod (385);
- the second end (381) of the first connecting rod (385) being rotatably connected to the first end (390) of the second connecting rod (395); and
- the second end (361) of the second connecting rod (395) being rotatably connected to said second element (320, 345);
wherein:
- said second element (320, 345) comprises a foot (325,321) and said first element is adapted and configured to slide inside said second element (320, 345); **characterized in that** the second end of the first element lies, when it is in said resting position, inside said foot (325,321).

2. A suspension (300) according to claim 1, wherein said wheel (600) has a rotation axis and wherein the second end (361) of said second connecting rod (395) is rotatably connectible to said second element about said rotation axis.

3. A suspension (300) according to claim 1, wherein said wheel (600) has a rotation axis and wherein the second end (361) of said second connecting rod (395) is rotatably connectible to said second element about an axis parallel and not coincident with said rotation axis.

4. A suspension (300) according to one or more of the preceding claims, wherein said first (385) and said second (395) connecting rod protrude, at least partially, from said foot (325, 321), in said compression position.

5. A suspension (300) according to one or more of the preceding claims, wherein said return elastic means comprise a spring (340, 340') arranged in abutment between said first (310, 315) and second element (320, 345) and arranged inside said second element (320, 345).

6. A suspension (300) according to claim 5, wherein said first element (315) comprises a hydraulic assembly comprising a cylinder (351) and a relative piston (350), one end (330) of said relative piston being fixed (346) to said second element (320), said hydraulic assembly being surrounded, at least partially, by said spring (340').

7. A suspension (300) according to one or more of the preceding claims, further comprising damping means for damping said sliding, for example at least one bush (366) or a hydraulic piston (350, 351) or a torsion bar or a leaf spring.

8. A suspension (300) according to claim 7, wherein said damping means are placed at the series connection of the first and second connecting rod.

9. A suspension (300) according to one or more of the preceding claims, wherein the first end of the first element is connectible to the steering handlebar by means of a rigid kinematic mechanism (100,200).

10. A suspension (300) according to one or more of the claims from 1 to 9, when dependent on claim 4, wherein said foot (325, 321) is connected in a cantilever manner with respect to the body of said second element (320, 345), which said second connecting rod (395) is rotatingly connected to.

11. A suspension (300) according to one or more of the preceding claims, wherein said second element comprises connection supports (326) connectible to a brake caliper (400).

12. A suspension (300) according to one or more of the preceding claims, wherein the first and the second connecting rod each comprise an integral projecting element (386, 396), the first projecting element (386) and the second projecting element (396) being connecting to each other by said return elastic means (328).

13. A suspension (300) according to one or more of the preceding claims, wherein the first connecting rod (385) and the second connecting rod (395) form with each other an angle different from the straight angle.

14. A front axle (1000,2000,3000,4000) of a motorvehicle, in particular of a motorcycle, comprising a front wheel (600) and a steering handlebar (700), wherein said front wheel (600) is connected to said steering handlebar (700) by means of a single suspension (300) according to any of the claims from 1 to 13.

15. A motorvehicle (5000), in particular, a motor cycle, comprising a front axle (1000) according to claim 14.

## Patentansprüche

1. Aufhängung (300) für ein Rad (600) eines Kraftfahrzeugs mit einer Lenkstange, umfassend:
- ein erstes Element (310; 315), das ein erstes Ende und ein zweites Ende gegenüber dem ersten Ende umfasst, wobei das erste Ende mit der Lenkstange des Kraftfahrzeugs verbindbar ist;
- ein zweites Element (320, 345), das gleitend mit dem ersten Element (310; 315) gekoppelt und mit dem Rad (600) verbindbar ist, wobei das erste Element (310, 315) in Bezug auf das zweite Element zumindest teilweise zwischen einer Ruheposition und einer Betriebsposition bewegbar ist;
- elastische Rückstellmittel (340, 340') zum Zurückführen des ersten Elements (310; 315) in die Ruheposition;
wobei die Aufhängung (300) umfasst:
- eine erste Verbindungsstange (385) mit gegenüberliegenden ersten und zweiten Enden;
- eine zweite Verbindungsstange (395) mit gegenüberliegenden ersten und zweiten Enden;
- wobei das zweite Ende des ersten Elements (310; 315) drehbar mit dem ersten Ende (380) der ersten Verbindungsstange (385) verbunden ist;
- wobei das zweite Ende (381) der ersten Verbindungsstange (385) drehbar mit dem ersten Ende (390) der zweiten Verbindungsstange (395) verbunden ist; und
- wobei das zweite Ende (361) der zweiten Verbindungsstange (395) drehbar mit dem zweiten Element (320, 345) verbunden ist;
wobei:
- das zweite Element (320, 345) einen Fuß (325, 321) umfasst und das erste Element geeignet und konfiguriert ist, um innerhalb des zweiten Elements (320, 345) zu gleiten; **dadurch gekennzeichnet, dass**
- das zweite Ende des ersten Elements, wenn es sich in der Ruheposition befindet, innerhalb des Fußes (325, 321) liegt.

2. Aufhängung (300) nach Anspruch 1, wobei das Rad (600) eine Drehachse aufweist und wobei das zweite Ende (361) der zweiten Verbindungsstange (395) um die Drehachse drehbar mit dem zweiten Element verbindbar ist.

3. Aufhängung (300) nach Anspruch 1, wobei das Rad (600) eine Drehachse aufweist und wobei das zweite Ende (361) der zweiten Verbindungsstange (395) um eine parallele und nicht mit der Drehachse zusammenfallende Achse drehbar mit dem zweiten Element verbindbar ist.

4. Aufhängung (300) nach einem oder mehreren der vorhergehenden Ansprüche, wobei die erste Verbindungsstange (385) und die zweite Verbindungsstange (395) in der Kompressionsposition zumindest teilweise von dem Fuß (325, 321) vorstehen.

5. Aufhängung (300) nach einem oder mehreren der vorhergehenden Ansprüche, wobei die elastischen Rückstellmittel eine Feder (340, 340') umfassen, die anliegend zwischen dem ersten Element (310, 315) und dem zweiten Element (320, 345) angeordnet ist und innerhalb des zweiten Elements (320, 345) angeordnet ist.

6. Aufhängung (300) nach Anspruch 5, wobei das erste Element (315) eine Hydraulikbaugruppe umfasst, die einen Zylinder (351) und einen entsprechenden Kolben (350) umfasst, wobei ein Ende (330) des entsprechenden Kolbens an dem zweiten Element (320) befestigt (346) ist, wobei die hydraulische Baugruppe zumindest teilweise von der Feder (340') umgeben ist.

7. Aufhängung (300) nach einem oder mehreren der vorhergehenden Ansprüche, ferner umfassend Dämpfungsmittel zum Dämpfen des Gleitens, beispielsweise mindestens eine Buchse (366) oder einen Hydraulikkolben (350, 351) oder einen Torsionsstab oder eine Blattfeder.

8. Aufhängung (300) nach Anspruch 7, wobei die Dämpfungsmittel an der Reihenverbindung der ersten und der zweiten Verbindungsstange angeordnet sind.

9. Aufhängung (300) nach einem oder mehreren der vorhergehenden Ansprüche, wobei das erste Ende des ersten Elements mittels eines starren kinematischen Mechanismus (100, 200) mit der Lenkstange verbindbar ist.

10. Aufhängung (300) nach einem oder mehreren der Ansprüche 1 bis 9, wenn abhängig von Anspruch 4, wobei der Fuß (325, 321) freitragend in Bezug auf den Körper des zweiten Elements (320, 345) verbunden ist, mit dem die zweite Verbindungsstange (395) drehend verbunden ist.

11. Aufhängung (300) nach einem oder mehreren der vorhergehenden Ansprüche, wobei das zweite Element Verbindungsträger (326) umfasst, die mit einem Bremssattel (400) verbindbar sind.

12. Aufhängung (300) nach einem oder mehreren der vorhergehenden Ansprüche, wobei die erste und die zweite Verbindungsstange jeweils ein integrales vorstehendes Element (386, 396) umfassen, wobei das erste vorstehende Element (386) und das zweite vorstehende Element (396) durch die elastischen Rückstellmittel (328) miteinander verbunden sind.

13. Aufhängung (300) nach einem oder mehreren der vorhergehenden Ansprüche, wobei die erste Verbindungsstange (385) und die zweite Verbindungsstange (395) miteinander einen von dem gestreckten Winkel verschiedenen Winkel bilden.

14. Vorderachse (1000, 2000, 3000, 4000) eines Kraftfahrzeugs, insbesondere eines Motorrads, umfassend ein Vorderrad (600) und eine Lenkstange (700), wobei das Vorderrad (600) mittels einer einzigen Aufhängung (300) nach einem der Ansprüche 1 bis 13 mit der Lenkstange (700) verbunden ist.

15. Kraftfahrzeug (5000), insbesondere ein Motorrad, umfassend eine Vorderachse (1000) nach Anspruch 14.

## Revendications

1. Suspension (300) pour une roue (600) d'un véhicule à moteur avec un guidon de direction, comprenant :
- un premier élément (310 ; 315) comprenant une première extrémité et une seconde extrémité opposée à la première extrémité, la première extrémité pouvant être reliée au guidon de direction du véhicule à moteur ;
- un second élément (320, 345), accouplé de manière coulissante au premier élément (310 ; 315) et pouvant être relié à la roue (600), ledit premier élément (310, 315) étant mobile, au moins partiellement, par rapport au second élément, entre une position de repos et une position de fonctionnement ;
- des moyens élastiques de rappel (340, 340') pour ramener le premier élément (310 ; 315) dans la position de repos ;
la suspension (300) comprenant :
- une première bielle (385) avec des première et seconde extrémités opposées ;
- une seconde bielle (395) avec des première et seconde extrémités opposées ;
- la seconde extrémité du premier élément (310 ; 315) étant reliée de manière rotative à la première extrémité (380) de la première bielle (385) ;
- la seconde extrémité (381) de la première bielle (385) étant reliée de manière rotative à la première extrémité (390) de la seconde bielle (395) ; et
- la seconde extrémité (361) de la seconde bielle (395) étant reliée de manière rotative audit second élément (320, 345) ;
dans laquelle :
- ledit second élément (320, 345) comprend un pied (325, 321) et ledit premier élément est adapté et conçu pour coulisser à l'intérieur dudit second élément (320, 345) ; **caractérisée en ce que**
- la seconde extrémité du premier élément se trouve, lorsqu'il est dans ladite position de repos, à l'intérieur dudit pied (325, 321).

2. Suspension (300) selon la revendication 1, dans laquelle ladite roue (600) a un axe de rotation et dans laquelle la seconde extrémité (361) de ladite seconde bielle (395) peut être reliée de manière rotative audit second élément autour dudit axe de rotation.

3. Suspension (300) selon la revendication 1, dans laquelle ladite roue (600) a un axe de rotation et dans laquelle la seconde extrémité (361) de ladite seconde bielle (395) peut être reliée de manière rotative audit second élément autour d'un axe parallèle et ne coïncidant pas avec ledit axe de rotation.

4. Suspension (300) selon une ou plusieurs des revendications précédentes, dans laquelle ladite première (385) et ladite seconde (395) bielle font saillie, au moins partiellement, à partir dudit pied (325, 321), dans ladite position de compression.

5. Suspension (300) selon une ou plusieurs des revendications précédentes, dans laquelle lesdits moyens élastiques de rappel comprennent un ressort (340, 340') agencé en butée entre lesdits premier (310, 315) et second éléments (320, 345) et agencé à l'intérieur dudit second élément (320, 345).

6. Suspension (300) selon la revendication 5, dans laquelle ledit premier élément (315) comprend un ensemble hydraulique comprenant un cylindre (351) et un piston relatif (350), une extrémité (330) dudit piston relatif étant fixée (346) audit second élément (320), ledit ensemble hydraulique étant entouré, au moins partiellement, par ledit ressort (340').

7. Suspension (300) selon une ou plusieurs des revendications précédentes, comprenant en outre des moyens d'amortissement pour amortir ledit coulissement, par exemple au moins une douille (366) ou un piston hydraulique (350, 351) ou une barre de torsion ou un ressort à lame.

8. Suspension (300) selon la revendication 7, dans laquelle lesdits moyens d'amortissement sont placés au niveau de la liaison en série de la première et de la seconde bielle.

9. Suspension (300) selon une ou plusieurs des revendications précédentes, dans laquelle la première extrémité du premier élément peut être reliée au guidon de direction au moyen d'un mécanisme cinématique rigide (100, 200).

10. Suspension (300) selon une ou plusieurs des revendications 1 à 9, lorsqu'elles dépendent de la revendication 4, dans laquelle ledit pied (325, 321) est relié en porte-à-faux par rapport au corps dudit second élément (320, 345), auquel ladite seconde bielle (395) est reliée en rotation.

11. Suspension (300) selon une ou plusieurs des revendications précédentes, dans laquelle ledit second élément comprend des supports de liaison (326) pouvant être reliés à un étrier de frein (400).

12. Suspension (300) selon une ou plusieurs des revendications précédentes, dans laquelle la première et la seconde bielle comprennent chacune un élément saillant d'un seul tenant (386, 396), le premier élément saillant (386) et le second élément saillant (396) étant reliés l'un à l'autre par lesdits moyens élastiques de rappel (328).

13. Suspension (300) selon une ou plusieurs des revendications précédentes, dans laquelle la première bielle (385) et la seconde bielle (395) forment l'une avec l'autre un angle différent de l'angle droit.

14. Essieu avant (1000, 2000, 3000, 4000) d'un véhicule à moteur, en particulier d'une motocyclette, comprenant une roue avant (600) et un guidon de direction (700), dans lequel ladite roue avant (600) est reliée audit guidon de direction (700) au moyen d'une mono-suspension (300) selon l'une quelconque des revendications 1 à 13.

15. Véhicule à moteur (5000), en particulier motocyclette, comprenant un essieu avant (1000) selon la revendication 14.
